# EUROPEAN PATENT SPECIFICATION

(11) **EP 4 495 452 B1**
(45) Date of publication and mention of the grant of the patent: **09.09.2026**
(21) Application number: 23770676.7
(22) Date of filing: 10.03.2023
(51) Int. Cl.: F16F 1/32, F16F 3/02

(54) **DISC SPRING MEMBER**
TELLERFEDERELEMENT
ÉLÉMENT DE RESSORT À DISQUE

(30) Priority: 16.03.2022 JP 2022041658
(43) Date of publication of application: 22.01.2025
(73) Proprietor: NHK Spring Co., Ltd., Yokohama-shi, Kanagawa 236-0004 (JP)
(72) Inventor: TAJIMA Norihiro, Yokohama-shi, Kanagawa 236-0004 (JP); YONEOKA Atsushi, Yokohama-shi, Kanagawa 236-0004 (JP); TAKAHASHI Shuji, Yokohama-shi, Kanagawa 236-0004 (JP)
(74) Representative: V.O.
(86) International application number: PCT/JP2023/009311
(87) International publication number: WO 2023/176721

(56) References cited:
- CN-U- 205 401 566
- JP-B1- S3 710 353

## Description

### TECHNICAL FIELD

The present invention relates to a disc spring member.

Priority is claimed on Japanese Patent Application No. 2022-041658, filed March 16, 2022.

### BACKGROUND ART

In the related art, as shown in Patent Document 1, for example, a spring member is known which is provided between a first pressed body and a second pressed body, which face each other in a first direction, in a state of pressing the first pressed body and the second pressed body in directions away from each other in the first direction. Document JP S37 10353 B1 discloses a relevant disc spring member according to the pre-amble of claim 1.

### Citation List

### Patent Document

Patent Document 1: Japanese Unexamined Patent Application, First Publication No. 2014-11936

### SUMMARY OF INVENTION

### Technical Problem

In the spring member in the related art, for example, in a case of attempting to use the spring member to conduct a current or transfer heat from one of the first pressed body and the second pressed body to the other, it is difficult to stably exhibit characteristics of the spring member, such as conductivity and heat transfer properties, as designed while prioritizing load characteristics of the spring member.

The present invention has been made in consideration of such circumstances, and an object of the present invention is to provide a disc spring member capable of stably exhibiting characteristics such as conductivity and heat transfer properties as designed.

### Solution to Problem

According to an aspect of the present invention, there is provided a disc spring member that is provided between a first pressed body and a second pressed body, which face each other in a first direction, in a state of pressing the first pressed body and the second pressed body in directions away from each other in the first direction, the disc spring member including a first member and a second member, in which the second member increases in diameter from a side of the first pressed body to a side of the second pressed body in a state of being provided between the first pressed body and the second pressed body, in a cross-sectional view taken along the first direction, the first member spans the second member in the first direction such that the first member is located at least at a radially inner end portion of an outer peripheral surface, which faces radially outward, of the second member and a radially outer end portion of an inner peripheral surface, which faces radially inward, of the second member, and the second member presses the first pressed body via the first member and presses the second pressed body via the first member.

The first member that abuts on the first pressed body and the second pressed body, and the second member that brings the first member into contact with the first pressed body and the second pressed body are separately provided. Therefore, for example, characteristics such as conductivity and heat transfer properties can be stably exhibited as designed.

In addition, the disc spring member includes the first member and the second member, and in a cross-sectional view taken along the first direction, the first member spans the second member in the first direction such that the first member is located at least at the radially inner end portion of the outer peripheral surface of the second member and the radially outer end portion of the inner peripheral surface of the second member. Therefore, by providing the second member between the first pressed body and the second pressed body and elastically deforming the second member in the first direction by the first pressed body and the second pressed body, it is possible to strongly bring the first member into contact with each of the first pressed body and the second pressed body, and it is possible to stably exhibit characteristics mainly of the first member, such as conductivity and heat transfer properties, as designed.

The first member may be formed of a material having at least one of electrical conductivity and thermal conductivity higher than a material forming the second member, and the second member may be formed of a material having a higher Young's modulus than the material forming the first member.

Since the disc spring member is provided with the first member and a surface of the second member is not plated with the same material as the first member, at least one of the electrical conductivity and thermal conductivity can be easily secured at a high level, peeling of the plating does not occur, and the above-mentioned characteristics as designed can be exhibited for a long period of time.

The first member may be sandwiched between the first pressed body and the radially inner end portion of the outer peripheral surface of the second member in the first direction, and be sandwiched between the second pressed body and the radially outer end portion of the inner peripheral surface of the second member in the first direction.

A plurality of the first members are be provided at intervals in a circumferential direction, the plurality of first members are connected via a connecting plate extending in the circumferential direction, and the plurality of first members and the connecting plate are integrally formed of the same material.

Since the plurality of first members are provided at intervals in the circumferential direction, at least one of the electrical conductivity and thermal conductivity can be reliably secured at a high level.

Since the plurality of first members and the connecting plate that connects the first members in the circumferential direction are integrally formed of the same material, an increase in the number of components can be prevented, and the disc spring member can be easily assembled.

A through-hole extending in the first direction may be formed in one of the first member and the second member, and the other of the first member and the second member may be inserted into the through-hole such that the first member spans the second member in the first direction.

The first member spans the second member in the first direction by inserting the other of the first member and the second member into the through-hole formed in one of the first member and the second member. Therefore, the disc spring member having the above-described effect can be easily formed.

The second member may decrease in diameter from the side of the first pressed body to the side of the second pressed body and may be formed to be deformable in a reverse bending manner in which the second member increases in diameter from the side of the first pressed body to the side of the second pressed body, and when the second member is deformed in a reverse bending manner, a size of the second member in the first direction may be increased compared to a size of the second member in the first direction before the deformation.

The second member is formed to be deformable in a reverse bending manner, and when the second member is deformed in a reverse bending manner, the size of the second member in the first direction is increased compared to the size of the second member in the first direction before the deformation.

Therefore, after the disc spring member is disposed between the first pressed body and the second pressed body, the first pressed body and the second pressed body are moved closer to each other in the first direction and the second member is pushed in the first direction by the first pressed body and the second pressed body, whereby the second member is deformed in a reverse bending manner so that the second member increases in diameter from the side of the first pressed body to the side of the second pressed body, and the second member is sandwiched between the first pressed body and the second pressed body in the first direction to be compressed and deformed.

Accordingly, even in a case where a pressing amount of the second member against the first pressed body and the second pressed body in the first direction is suppressed to a low level, a large compression deformation amount of the second member in the first direction can be secured. In addition, since the first member does not strongly slide on the first pressed body and the second pressed body when the disc spring member is disposed between the first pressed body and the second pressed body, the first member can be suppressed from being misaligned with respect to the second member.

### Advantageous Effects of Invention

According to the invention, the characteristics of the disc spring member, such as conductivity and heat transfer properties, can be stably exhibited as designed.

### BRIEF DESCRIPTION OF DRAWINGS

[FIG. 1A] A cross-sectional view of a disc spring member of a first embodiment taken along a first direction.
[FIG. 1B] A view of the disc spring member of FIG. 1A as viewed from an outside in a radial direction.
[FIG. 2A] Across-sectional view of a disc spring member of a second embodiment taken along the first direction.
[FIG. 2B] A view of the disc spring member of FIG. 2A as viewed from the outside in the radial direction.
[FIG. 3] A cross-sectional view of a disc spring member of a third embodiment taken along the first direction.
[FIG. 4] A view of a disc spring member of a fourth embodiment as viewed from the outside in the radial direction.
[FIG. 5] A view of the disc spring member of a fifth embodiment as viewed from the outside in the radial direction.
[FIG. 6] A cross-sectional view of a disc spring member of a sixth embodiment taken along the first direction.
[FIG. 7] A cross-sectional view of a disc spring member of a modification example of the sixth embodiment taken along the first direction.
[FIG. 8] A cross-sectional view of a disc spring member of another modification example of the sixth embodiment taken along the first direction.

### DESCRIPTION OF EMBODIMENTS

Hereinafter, a first embodiment of a disc spring member according to the present invention will be described with reference to the accompanying drawings.

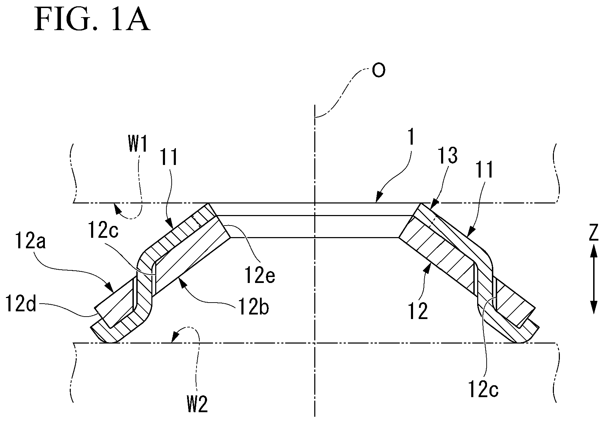

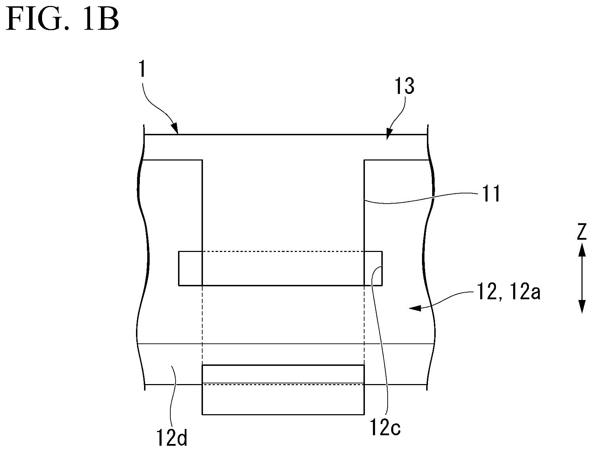

As shown in FIGS. 1A and 1B, a disc spring member 1 according to the present embodiment is provided between a first pressed body W1 and a second pressed body W2, which face each other in a first direction Z, in a state of pressing the first pressed body W1 and the second pressed body W2 in directions away from each other in the first direction Z. It should be noted that another member may be disposed between the disc spring member 1 and the first pressed body W1, or another member may be disposed between the disc spring member 1 and the second pressed body W2.

In the following description, the statement that the disc spring member presses the first pressed body W1 and the second pressed body W2 in directions away from each other in the first direction Z includes the following cases (1) and (2). That is, in the case (1), the disc spring member abuts on the first pressed body W1 and on the second pressed body W2 in the first direction Z such that the disc spring member presses the first pressed body W1 and the second pressed body W2 in directions away from each other in the first direction Z. In the case (2), the disc spring member abuts on the first pressed body W1 and on the second pressed body W2 in the first direction Z or in a direction different from the first direction Z such that the disc spring member presses the first pressed body W1 and the second pressed body W2 in directions away from each other in the first direction Z.

Hereinafter, a side of the first pressed body W1 along the first direction Z is referred to as one side, and a side of the second pressed body W2 along the first direction Z is referred to as the other side.

The disc spring member 1 includes conductive plates 11 (first member) and a spring main body 12 (second member). The conductive plate 11 and the spring main body 12 are provided in a state in which the conductive plate 11 and the spring main body 12 are not bonded to each other over the entire region.

The conductive plate 11 is formed of a material having at least one of electrical conductivity and thermal conductivity higher than that of a material forming the spring main body 12. The conductive plate 11 is formed of, for example, copper or aluminum. A plate thickness of the conductive plate 11 is, for example, about 50 µm to 100 µm.

The spring main body 12 is formed of a material having a higher Young's modulus than the material forming the conductive plate 11. The spring main body 12 is formed of, for example, carbon steel or stainless steel. The spring main body 12 is a disc spring that increases in diameter from one side to the other side in a state of being provided between the first pressed body W1 and the second pressed body W2. The spring main body 12 is formed in an annular shape and is arranged coaxially with a center axis O that extends along the first direction Z.

Hereinafter, a direction intersecting the center axis O when viewed in the first direction Z is referred to as a radial direction, and a direction around the center axis O is referred to as a circumferential direction.

In a cross-sectional view taken along the first direction Z, the conductive plate 11 spans the spring main body 12 in the first direction Z such that the conductive plate 11 is located at least at a radially inner end portion of an outer peripheral surface 12a, which faces radially outward, of the spring main body 12 and a radially outer end portion of an inner peripheral surface 12b, which faces radially inward, of the spring main body 12. Accordingly, when the disc spring member 1 is provided between the first pressed body W1 and the second pressed body W2, the conductive plate 11 is sandwiched between the first pressed body W1 and the radially inner end portion of the outer peripheral surface 12a of the spring main body 12 in the first direction Z, and is sandwiched between the second pressed body W2 and the radially outer end portion of the inner peripheral surface 12b of the spring main body 12 in the first direction Z. The spring main body 12 presses the first pressed body W1 via the conductive plate 11 and presses the second pressed body W2 via the conductive plate 11.

In the present embodiment, a through-hole 12c extending in the first direction Z is formed in the spring main body 12, and the conductive plate 11 is inserted into the through-hole 12c to span the spring main body 12 in the first direction Z. The conductive plate 11 has a rectangular shape that is long in the radial direction when viewed in the first direction Z. The conductive plate 11 extends from an inside to an outside in the radial direction in a direction from one side to the other side. In the conductive plate 11, a radially inner part is located at the outer peripheral surface 12a of the spring main body 12, a radially intermediate part is inserted into the through-hole 12c, and a radially outer part is located at the inner peripheral surface 12b of the spring main body 12.

In the shown example, a radially outer end portion of the conductive plate 11 is bent toward one side and covers at least a part of a radially outer end surface 12d of the spring main body 12.

The radially outer end portion of the conductive plate 11 may not need to be bent toward one side. A radially inner end portion of the conductive plate 11 may be bent toward the other side and cover at least a part of a radially inner end surface 12e of the spring main body 12.

A plurality of the conductive plates 11 are provided at intervals in the circumferential direction. The plurality of conductive plates 11 are connected via a connecting plate 13 extending in the circumferential direction. The plurality of conductive plates 11 and the connecting plate 13 are integrally formed of the same material.

In the shown example, the connecting plate 13 is formed in a band shape (annular shape) extending in the circumferential direction. The connecting plate 13 connects the radially inner end portions of the conductive plates 11 adjacent to each other in the circumferential direction.

The connecting plate 13 may be formed, for example, in a disk shape or the like that is arranged coaxially with the center axis O. The connecting plate 13 may connect radially intermediate portions or the radially outer end portions of the conductive plates 11 adjacent to each other in the circumferential direction. The plurality of conductive plates 11 may be independently provided without the connecting plate 13.

A size of the disc spring member 1 in the first direction Z may be set to be larger than a distance in the first direction Z between the first pressed body W1 and the second pressed body W2 before the disc spring member 1 is assembled, or to be smaller than the distance.

In a case where the distance is larger than the disc spring member 1, after the disc spring member 1 is disposed between the first pressed body W1 and the second pressed body W2, the first pressed body W1 and the second pressed body W2 are moved closer to each other in the first direction Z, and the spring main body 12 is sandwiched between the first pressed body W1 and the second pressed body W2 in the first direction Z to be compressed and deformed.

When the spring main body 12 is sandwiched between the first pressed body W1 and the second pressed body W2 in the first direction Z to be compressed and deformed, another member may be disposed between the disc spring member 1 and the first pressed body W1, or another member may be disposed between the disc spring member 1 and the second pressed body W2.

In a case where the above-described distance is smaller than the disc spring member 1, the disc spring member 1 is disposed between the first pressed body W1 and the second pressed body W2 in a state in which the disc spring member 1 is pushed in the first direction Z in advance using a jig.

As described above, the disc spring member 1 according to the present embodiment includes the conductive plate 11 and the spring main body 12, and in a cross-sectional view taken along the first direction Z, the conductive plate 11 spans the spring main body 12 in the first direction Z such that the conductive plate 11 is located at least at the radially inner end portion of the outer peripheral surface 12a of the spring main body 12 and the radially outer end portion of the inner peripheral surface 12b of the spring main body 12. By providing the disc spring member 1 between the first pressed body W1 and the second pressed body W2 and elastically deforming the spring main body 12 in the first direction Z by the first pressed body W1 and the second pressed body W2, it is possible to strongly bring the conductive plate 11 into contact with each of the first pressed body W1 and the second pressed body W2, and it is possible to stably exhibit characteristics mainly of the conductive plate 11, such as conductivity and heat transfer properties, as designed.

Since the disc spring member 1 is provided with the conductive plate 11 and a surface of the spring main body 12 is not plated with the same material as the conductive plate 11, at least one of the electrical conductivity and thermal conductivity can be easily secured at a high level, peeling of the plating does not occur, and the above-mentioned characteristics as designed can be exhibited for a long period of time.

Since the plurality of conductive plates 11 are provided at intervals in the circumferential direction, at least one of the electrical conductivity and thermal conductivity can be reliably secured at a high level.

Since the plurality of conductive plates 11 and the connecting plate 13 that connects the conductive plates 11 in the circumferential direction are integrally formed of the same material, an increase in the number of components can be prevented, and the disc spring member 1 can be easily assembled.

Since the conductive plate 11 spans the spring main body 12 in the first direction Z by inserting the conductive plate 11 into the through-hole 12c formed in the spring main body 12, the disc spring member 1 having the above-described effect can be easily formed.

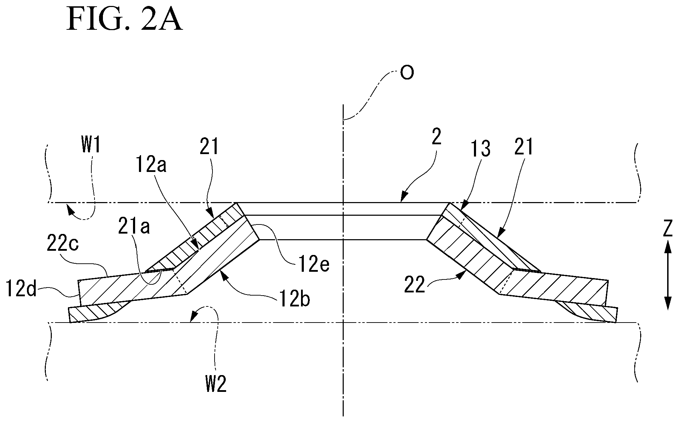

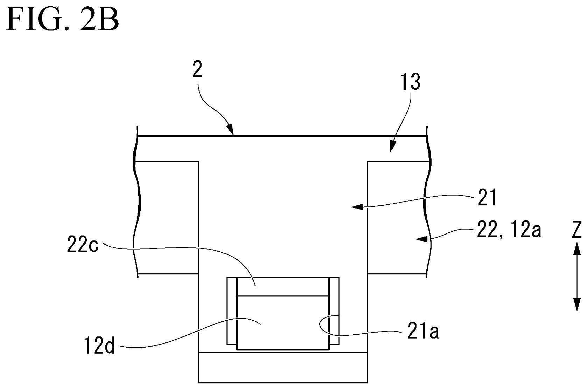

Next, a disc spring member 2 according to a second embodiment of the present invention will be described with reference to FIGS. 2A and 2B.

In the second embodiment, the same portions as the constituent elements in the first embodiment will be denoted by the same reference signs, descriptions thereof will be omitted, and only different points will be described.

In the disc spring member 2 according to the present embodiment, the through-hole 12c is not formed in a spring main body 22 (second member), and a through-hole 21a is formed in a conductive plate 21 (first member). A plate-shaped locking protrusion 22c that protrudes radially outward and is inserted into the through-hole 21a is formed at a radially outer end portion of the spring main body 22. Front and back surfaces of the locking protrusion 22c respectively constitute radially outer end portions of the outer peripheral surface 12a and the inner peripheral surface 12b of the spring main body 22.

A part of the conductive plate 21 located radially inward of the through-hole 21a is located at the outer peripheral surface 12a of the spring main body 22. By inserting the locking protrusion 22c of the spring main body 22 into the through-hole 21a, the conductive plate 21 spans the spring main body 22 in the first direction Z such that the conductive plate 21 is located at least at the radially inner end portion of the outer peripheral surface 12a of the spring main body 22 and the radially outer end portion of the inner peripheral surface 12b of the spring main body 22, in a cross-sectional view taken along the first direction Z.

Also in the disc spring member 2 according to the present embodiment, the characteristics such as conductivity and heat transfer properties can be stably exhibited as designed.

Since the conductive plate 21 spans the spring main body 22 in the first direction Z by inserting the locking protrusion 22c formed in the spring main body 22 into the through-hole 21a formed in the conductive plate 21, the disc spring member 2 having the above-described effect can be easily formed.

It should be noted that a configuration may be adopted in which the locking protrusion 22c is formed at the radially inner end portion of the spring main body 22 and protrudes radially inward.

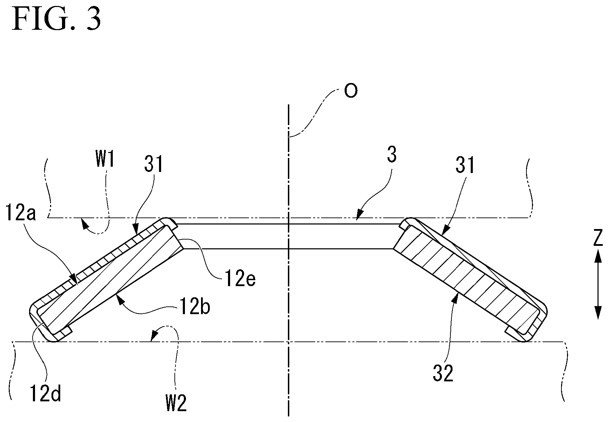

Next, a disc spring member 3 according to a third embodiment of the present invention will be described with reference to FIG. 3.

In the third embodiment, the same portions as the constituent elements in the first embodiment will be denoted by the same reference signs, descriptions thereof will be omitted, and only different points will be described.

In the disc spring member 3 according to the present embodiment, the throughholes 12c and 21a are not formed in a conductive plate 31 (first member) and a spring main body 32 (second member). In a cross-sectional view taken along the first direction Z, the conductive plate 31 is located over the entire region of the outer peripheral surface 12a of the spring main body 32. In the cross-sectional view taken along the first direction Z, a radially inner end portion of the conductive plate 31 is bent toward the other side and covers at least a part of the radially inner end surface 12e of the spring main body 32. In the cross-sectional view taken along the first direction Z, a radially outer end portion of the conductive plate 31 is bent toward the other side, covers the entire region of the radially outer end surface 12d of the spring main body 32, and is located at the radially outer end portion of the inner peripheral surface 12b of the spring main body 32. The radially inner end portion of the conductive plate 31 may not need to be bent toward the other side.

That is, in the present embodiment, in a cross-sectional view taken along the first direction Z, the conductive plate 31 is located over the entire region of the outer peripheral surface 12a of the spring main body 32, and the radially outer end portion of the conductive plate 31 is bent toward the other side, covers the entire region of the radially outer end surface 12d of the spring main body 32, and is located at the radially outer end portion of the inner peripheral surface 12b of the spring main body 32. Accordingly, the conductive plate 21 spans the spring main body 32 in the first direction Z such that the conductive plate 21 is located at least at the radially inner end portion of the outer peripheral surface 12a of the spring main body 22 and the radially outer end portion of the inner peripheral surface 12b of the spring main body 22, in a cross-sectional view taken along the first direction Z.

Also in the disc spring member 3 according to the present embodiment, the characteristics such as conductivity and heat transfer properties can be stably exhibited as designed.

It should be noted that a configuration may be adopted in which, in a cross-sectional view taken along the first direction Z, the conductive plate 31 is located over the entire region of the inner peripheral surface 12b of the spring main body 32, the radially outer end portion of the conductive plate 31 is bent toward one side and covers at least a part of the radially outer end surface 12d of the spring main body 32, the radially inner end portion of the conductive plate 31 is bent toward one side, covers the entire region of the radially inner end surface 12e of the spring main body 32, and is located at the radially inner end portion of the outer peripheral surface 12a of the spring main body 32.

In this configuration, the radially outer end portion of the conductive plate 31 may not need to be bent toward one side.

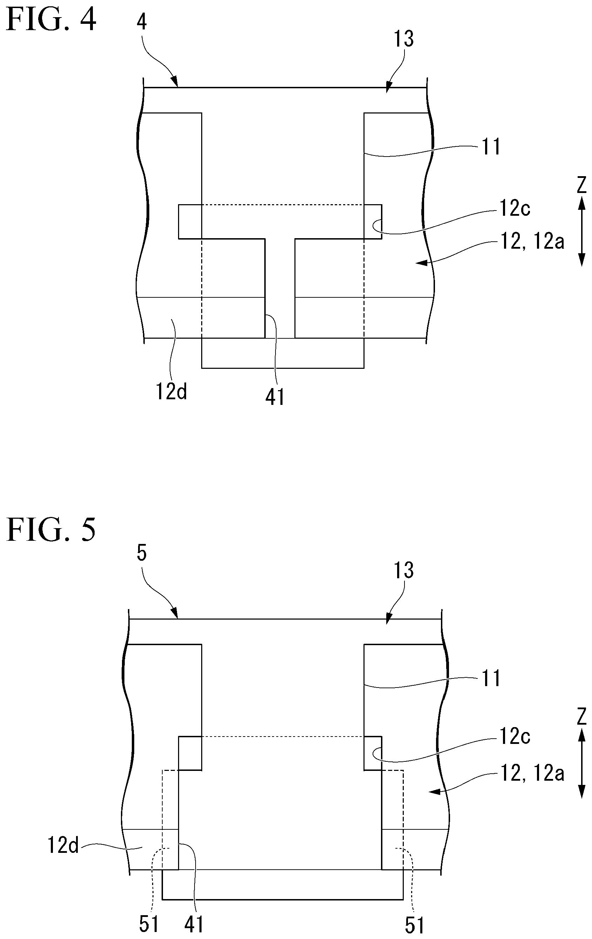

Next, a disc spring member 4 according to a fourth embodiment of the present invention will be described with reference to FIG. 4.

In the fourth embodiment, the same portions as the constituent elements in the first embodiment will be denoted by the same reference signs, descriptions thereof will be omitted, and only different points will be described.

In the disc spring member 4 according to the present embodiment, a slit 41 that extends radially outward from the through-hole 12c and opens to the radially outer end surface 12d of the spring main body 12 is formed in the spring main body 12. A size of the slit 41 in the circumferential direction is smaller than a size of the through-hole 12c in the circumferential direction. Center portions of the slit 41 and the through-hole 12c in the circumferential direction coincide with each other.

The radially outer end portion of the conductive plate 11 is not bent toward one side, and the radially outer end surface 12d of the spring main body 12 is not covered by the conductive plate 11.

Also in the disc spring member 4 according to the present embodiment, the characteristics such as conductivity and heat transfer properties can be stably exhibited as designed.

The slit 41 may extend radially inward from the through-hole 12c and open to the radially inner end surface 12e of the spring main body 12. The size of the slit 41 in the circumferential direction may be increased or decreased from the outside to the inside in the radial direction.

Next, a disc spring member 5 according to a fifth embodiment of the present invention will be described with reference to FIG. 5.

In the fifth embodiment, the same portions as the constituent elements in the fourth embodiment will be denoted by the same reference signs, descriptions thereof will be omitted, and only different points will be described.

In the disc spring member 5 according to the present embodiment, the size of the slit 41 in the circumferential direction is the same as the size of the through-hole 12c in the circumferential direction. A pair of extending protrusions 51 that protrude on both sides in the circumferential direction are formed at the radially outer end portion of the conductive plate 11. The extending protrusions 51 protrude outward in the circumferential direction from the through-hole 12c and the slit 41, and are located at the radially outer end portion of the inner peripheral surface 12b of the spring main body 12.

Also in the disc spring member 5 according to the present embodiment, the characteristics such as conductivity and heat transfer properties can be stably exhibited as designed.

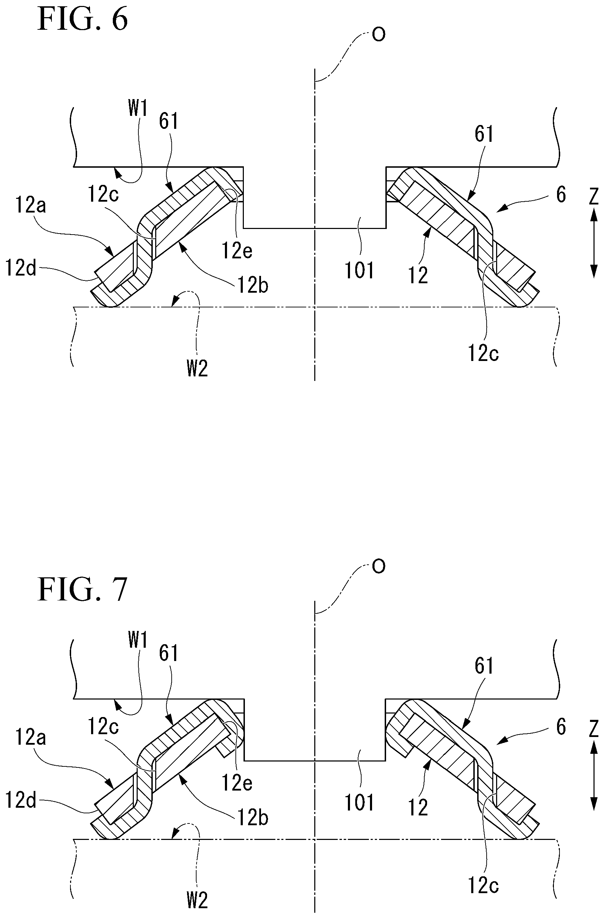

Next, a disc spring member 6 according to a sixth embodiment of the present invention will be described with reference to FIG. 6.

In the sixth embodiment, the same portions as the constituent elements in the first embodiment will be denoted by the same reference signs, descriptions thereof will be omitted, and only different points will be described.

In the present embodiment, the first pressed body W1 includes a shaft portion 101 that protrudes toward the second pressed body W2 in the first direction Z. The shaft portion 101 extends to the other side in the first direction Z and is arranged coaxially with the center axis O. The shaft portion 101 is inserted through the annular spring main body 12.

In the disc spring member 6 according to the present embodiment, a radially inner end portion of a conductive plate 61 (first member) is bent toward the other side and covers at least a part of the radially inner end surface 12e of the spring main body 12. In the example shown in FIG. 6, the radially inner end portion of the conductive plate 61 covers the entire region of the inner end surface 12e.

The radially inner end portion of the conductive plate 61 abuts on an outer peripheral surface of the shaft portion 101. That is, the conductive plate 61 abuts on the first pressed body W1 in the first direction Z and in the radial direction. The radially inner end portion of the conductive plate 61 need only abut on the outer peripheral surface of the shaft portion 101 by being bent toward the other side, and may cover only a part of the inner end surface 12e. In addition, as shown in FIG. 7, the radially inner end portion of the conductive plate 61 may be formed to be bent toward the other side, cover the entire region of the radially inner end surface 12e of the spring main body 12, and be located at the radially inner end portion of the inner peripheral surface 12b of the spring main body 12.

In addition, before the spring main body 12 is compressed and deformed, the radially inner end portion of the conductive plate 61 may not abut on the outer peripheral surface of the shaft portion 101, and after the spring main body 12 is compressed and deformed, the radially inner end portion of the conductive plate 61 may abut on the outer peripheral surface of the shaft portion 101. The radially inner end portion of the conductive plate 61 may abut on the outer peripheral surface of the shaft portion 101 even before the spring main body 12 is compressed and deformed.

In the present embodiment, the conductive plate 61 can be brought into contact with the first pressed body W1 in the radial direction in addition to the first direction Z. Therefore, in the disc spring member 6 according to the present embodiment, the characteristics such as conductivity and heat transfer properties can be stably exhibited as designed.

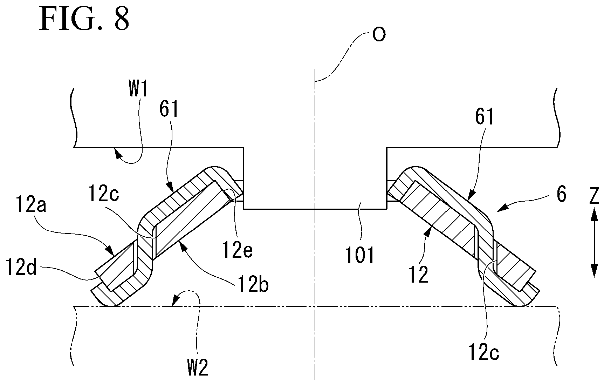

As shown in FIG. 8, the first pressed body W1 and the conductive plate 61 may be separated from each other in the first direction Z after the radially inner end portion of the conductive plate 61 abut on the outer peripheral surface of the shaft portion 101. Even in this case, the conductive plate 61 abuts on the first pressed body W1 in the radial direction and abuts on the second pressed body W2 in the first direction Z, so that the disc spring member 6 presses the first pressed body W1 and the second pressed body W2 in directions away from each other in the first direction Z.

In this modification example, the conductive plate 61 can be brought into contact with the first pressed body W1 in the radial direction instead of the first direction Z. Therefore, also in the disc spring member 6 of this modification example, the characteristics such as conductivity and heat transfer properties can be stably exhibited as designed.

The technical scope of the present invention is not limited to the above-described embodiments, and various modifications can be made within the scope not departing from the meaning of the present invention.

For example, as the spring main body, a configuration may be adopted in which a distribution of residual stress of on the outer peripheral surface 12a side and a distribution of residual stress on the inner peripheral surface 12b side are adjusted such that the spring main body decreases in diameter from one side to the other side before being provided between the first pressed body W1 and the second pressed body W2, and when the spring main body is deformed in a reverse bending (inverted) manner so that the spring main body increases in diameter from one side to the other side, a size of the spring main body in the first direction Z increases compared to a size of the spring main body before the deformation.

In this spring main body, after the spring main body is disposed between the first pressed body W1 and the second pressed body W2, the first pressed body W1 and the second pressed body W2 are moved closer to each other in the first direction Z and the spring main body is pushed in the first direction Z by the first pressed body W1 and the second pressed body W2, whereby the spring main body is deformed in a reverse bending manner so that the spring main body increases in diameter from one side to the other side. Even in this configuration, the spring main body increases in diameter from one side to the other side in a state of being provided between the first pressed body W1 and the second pressed body W2, and is sandwiched between the first pressed body W1 and the second pressed body W2 in the first direction Z to be compressed and deformed.

In this spring main body, even in a case where a pressing amount of the spring main body against the first pressed body W1 and the second pressed body W2 in the first direction Z is suppressed to a low level, a large compression deformation amount of the spring main body in the first direction Z can be secured.

In addition, since the conductive plate does not strongly slide on the first pressed body W1 and the second pressed body W2 when the disc spring member is disposed between the first pressed body W1 and the second pressed body W2, the conductive plate can be suppressed from being misaligned with respect to the spring main body.

In this configuration, another member may be disposed between the disc spring member and the first pressed body W1, or another member may be disposed between the disc spring member and the second pressed body W2.

The disc spring member may be pushed in the first direction Z in advance using a jig, and the disc spring member may be disposed between the first pressed body W1 and the second pressed body W2 in a state where the spring main body is deformed in a reverse bending manner.

When the spring main body is deformed in a reverse bending manner, the spring main body may be subjected to, for example, vibration or heat, instead of being pushed in the first direction Z by the first pressed body W1 and the second pressed body W2.

In addition, the components in the above-described embodiments can be appropriately replaced with well-known components within a range not departing from the meaning of the present invention, and the embodiments and modified examples described above may be appropriately combined.

### INDUSTRIAL APPLICABILITY

According to the present invention, the characteristics of the disc spring member, such as conductivity and heat transfer properties, can be stably exhibited as designed.

### REFERENCE SIGNS LIST

1 to 6: Disc spring member
11, 21, 31, 61: Conductive plate (first member)
12, 22, 32: Spring main body (second member)
12a: Outer peripheral surface
12b: Inner peripheral surface
12c, 21a: Through-hole
13: Connecting plate
W1: First pressed body
W2: Second pressed body
Z: First direction

## Claims

1. A disc spring member (1, 2, 3, 4, 5, 6) that is provided between a first pressed body (W1) and a second pressed body (W2), which face each other in a first direction (Z), in a state of pressing the first pressed body (W1) and the second pressed body (W2) in directions away from each other in the first direction (Z), the disc spring member (1, 2, 3, 4, 5, 6) comprising:
a first member (11, 21, 31, 61); and
a second member (12, 22, 32),
the second member (12, 22, 32) increasing in diameter from a side of the first pressed body (W1) to a side of the second pressed body (W2) in a state of being provided between the first pressed body (W1) and the second pressed body (W2),
**characterized in that**
a plurality of the first members (11, 21, 31, 61) are provided at intervals in a circumferential direction,
the plurality of first members (11, 21, 31, 61) are connected via a connecting plate (13) extending in the circumferential direction,
the plurality of first members (11, 21, 31, 61) and the connecting plate (13) are integrally formed of the same material,
in a cross-sectional view taken along the first direction (Z), the first member (11, 21, 31, 61) spans the second member (12, 22, 32) in the first direction (Z) such that the first member (11, 21, 31, 61) or the connecting plate (13) is located at least at a radially inner end portion of an outer peripheral surface (12a), which faces radially outward, of the second member (12, 22, 32) and a radially outer end portion of an inner peripheral surface (12b), which faces radially inward, of the second member (12, 22, 32), and
the second member (12, 22, 32) presses the first pressed body (W1) via the first member (11, 21, 31, 61) or the connecting plate (13) and presses the second pressed body (W2) via the first member (11, 21, 31, 61) or the connecting plate (13).

2. The disc spring member (1, 2, 3, 4, 5, 6) according to Claim 1,
wherein the first member (11, 21, 31, 61) is formed of a material having at least one of electrical conductivity and thermal conductivity higher than a material forming the second member (12, 22, 32), and
the second member (12, 22, 32) is formed of a material having a higher Young's modulus than the material forming the first member (11, 21, 31, 61).

3. The disc spring member (1, 2, 3, 4, 5, 6) according to Claim 1 or 2,
wherein the first member (11, 21, 31, 61) or the connecting plate (13) is sandwiched between the first pressed body (W1) and the radially inner end portion of the outer peripheral surface (12a) of the second member (12, 22, 32) in the first direction (Z), and is sandwiched between the second pressed body (W2) and the radially outer end portion of the inner peripheral surface (12b) of the second member (12, 22, 32) in the first direction (Z).

4. The disc spring member (1, 2, 3, 4, 5, 6) according to any one of Claims 1 to 3,
wherein a through-hole (12c, 21a) extending in the first direction (Z) is formed in one of the first member (11, 21, 31, 61) and the second member (12, 22, 32), and the other of the first member (11, 21, 31, 61) and the second member (12, 22, 32) is inserted into the through-hole (12c, 21a) such that the first member (11, 21, 31, 61) spans the second member (12, 22, 32) in the first direction (Z).

5. The disc spring member (1, 2, 3, 4, 5, 6) according to any one of Claims 1 to 4,
wherein the second member (12, 22, 32) decreases in diameter from the side of the first pressed body (W1) to the side of the second pressed body (W2) and is formed to be deformable in a reverse bending manner in which the second member (12, 22, 32) increases in diameter from the side of the first pressed body (W1) to the side of the second pressed body (W2), and
when the second member (12, 22, 32) is deformed in a reverse bending manner, a size of the second member (12, 22, 32) in the first direction (Z) is increased compared to a size of the second member (12, 22, 32) in the first direction (Z) before the deformation.

## Patentansprüche

1. Tellerfederelement (1, 2, 3, 4, 5, 6), das zwischen einem ersten gepressten Körper (W1) und einem zweiten gepressten Körper (W2) bereitgestellt ist, die einander in einer ersten Richtung (Z) gegenüberliegen, in einem Zustand des Pressens des ersten gepressten Körpers (W1) und des zweiten gepressten Körpers (W2) in Richtungen voneinander weg in der ersten Richtung (Z), wobei das Tellerfederelement (1, 2, 3, 4, 5, 6) Folgendes umfasst:
ein erstes Element (11, 21, 31, 61); und
ein zweites Element (12, 22, 32),
wobei das zweite Element (12, 22, 32) in einem zwischen dem ersten gepressten Körper (W1) und dem zweiten gepressten Körper (W2) bereitgestellt Zustand in dem Durchmesser von einer Seite des ersten gepressten Körpers (W1) zu einer Seite des zweiten gepressten Körpers (W2) zunimmt,
**dadurch gekennzeichnet, dass**
eine Vielzahl der ersten Elemente (11, 21, 31, 61) in Abständen in einer Umfangsrichtung bereitgestellt ist,
die Vielzahl von ersten Elementen (11, 21, 31, 61) über eine Verbindungsplatte (13) verbunden ist, die sich in der Umfangsrichtung erstreckt,
die Vielzahl der ersten Elemente (11, 21, 31, 61) und die Verbindungsplatte (13) einstückig aus demselben Material gebildet sind,
in einer Querschnittsansicht entlang der ersten Richtung (Z) das erste Element (11, 21, 31, 61) das zweite Element (12, 22, 32) in der ersten Richtung (Z) derart überspannt, dass das erste Element (11, 21, 31, 61) oder die Verbindungsplatte (13) zumindest an einem radial inneren Endabschnitt einer Außenumfangsfläche (12a), die radial nach außen weist, des zweiten Elements (12, 22, 32) und einem radial äußeren Endabschnitt einer Innenumfangsfläche (12b), die radial nach innen weist, des zweiten Elements (12, 22, 32) angeordnet ist,
und das zweite Element (12, 22, 32) den ersten gepressten Körper (W1) über das erste Element (11, 21, 31, 61) oder die Verbindungsplatte (13) presst und den zweiten gepressten Körper (W2) über das erste Element (11, 21, 31, 61) oder die Verbindungsplatte (13) presst.

2. Tellerfederelement (1, 2, 3, 4, 5, 6) nach Anspruch 1,
wobei das erste Element (11, 21, 31, 61) aus einem Material ausgebildet ist, das mindestens eine von einer elektrischen Leitfähigkeit und einer Wärmeleitfähigkeit aufweist, die höher ist als die eines Materials, das das zweite Element (12, 22, 32) bildet, und
das zweite Element (12, 22, 32) aus einem Material ausgebildet ist, das einen höheren Elastizitätsmodul aufweist als das Material, das das erste Element (11, 21, 31, 61) bildet.

3. Tellerfederelement (1, 2, 3, 4, 5, 6) nach Anspruch 1 oder 2,
wobei das erste Element (11, 21, 31, 61) oder die Verbindungsplatte (13) zwischen dem ersten gepressten Körper (W1) und dem radial inneren Endabschnitt der Außenumfangsfläche (12a) des zweiten Elements (12, 22, 32) in der ersten Richtung (Z) sandwichartig angeordnet ist und zwischen dem zweiten gepressten Körper (W2) und dem radial äußeren Endabschnitt der Innenumfangsfläche (12b) des zweiten Elements (12, 22, 32) in der ersten Richtung (Z) sandwichartig angeordnet ist.

4. Tellerfederelement (1, 2, 3, 4, 5, 6) nach einem der Ansprüche 1 bis 3,
wobei ein Durchgangsloch (12c, 21a), das sich in der ersten Richtung (Z) erstreckt, in einem von dem ersten Element (11, 21, 31, 61) und dem zweiten Element (12, 22, 32) ausgebildet ist, und das andere von dem ersten Element (11, 21, 31, 61) und dem zweiten Element (12, 22, 32) in das Durchgangsloch (12c, 21a) derart eingesetzt ist, dass das erste Element (11, 21, 31, 61) das zweite Element (12, 22, 32) in der ersten Richtung (Z) überspannt.

5. Tellerfederelement (1, 2, 3, 4, 5, 6) nach einem der Ansprüche 1 bis 4,
wobei das zweite Element (12, 22, 32) in dem Durchmesser von der Seite des ersten gepressten Körpers (W1) zu der Seite des zweiten gepressten Körpers (W2) abnimmt und ausgebildet ist, um in einer umgekehrt biegenden Weise verformbar zu sein, in der das zweite Element (12, 22, 32) in dem Durchmesser von der Seite des ersten gepressten Körpers (W1) zu der Seite des zweiten gepressten Körpers (W2) zunimmt, und
wenn das zweite Element (12, 22, 32) in einer umgekehrt biegenden Weise verformt wird, eine Abmessung des zweiten Elements (12, 22, 32) in der ersten Richtung (Z) im Vergleich zu einer Abmessung des zweiten Elements (12, 22, 32) in der ersten Richtung (Z) vor der Verformung zunimmt.

## Revendications

1. Élément de ressort à disque (1, 2, 3, 4, 5, 6) qui est prévu entre un premier corps pressé (W1) et un deuxième corps pressé (W2), qui se font face dans une première direction (Z), dans un état de pression du premier corps pressé (W1) et du deuxième corps pressé (W2) dans des directions opposées l'un par rapport à l'autre dans la première direction (Z), l'élément de ressort à disque (1, 2, 3, 4, 5, 6) comprenant :
un premier élément (11, 21, 31, 61) ; et
un deuxième élément (12, 22, 32),
le deuxième élément (12, 22, 32) augmentant du point de vue du diamètre à partir d'un côté du premier corps pressé (W1) jusqu'à un côté du deuxième corps pressé (W2) dans un état dans lequel il est prévu entre le premier corps pressé (W1) et le deuxième corps pressé (W2),
**caractérisé en ce que** :
une pluralité de premiers éléments (11, 21, 31, 61) sont prévus à intervalles dans une direction circonférentielle,
la pluralité de premiers éléments (11, 21, 31, 61) sont raccordés via une plaque de raccordement (13) s'étendant dans la direction circonférentielle,
la pluralité de premiers éléments (11, 21, 31, 61) et la plaque de raccordement (13) sont formées de manière solidaire avec le même matériau,
sur une vue en coupe prise dans la première direction (Z), le premier élément (11, 21, 31, 61) couvre le deuxième élément (12, 22, 32) dans la première direction (Z) de sorte que le premier élément (11, 21, 31, 61) ou bien la plaque de raccordement (13) est situé(e) au moins au niveau d'une partie d'extrémité radialement interne d'une surface périphérique externe (12a), qui est orientée radialement vers l'extérieur du deuxième élément (12, 22, 32) et une partie d'extrémité radialement externe d'une surface périphérique interne (12b) qui est orientée radialement vers l'intérieur, du deuxième élément (12, 22, 32), et
le deuxième élément (12, 22, 32) comprime le premier corps pressé (W1) via le premier élément (11, 21, 31, 61) ou bien la plaque de raccordement (13) et comprime le deuxième corps pressé (W2) via le premier élément (11, 21, 31, 61) ou la plaque de raccordement (13).

2. Élément de ressort à disque (1, 2, 3, 4, 5, 6) selon la revendication 1,
dans lequel le premier élément (11, 21, 31, 61) est formé avec un matériau présentant au moins l'une parmi la conductivité électrique et la conductivité thermique, supérieure à un matériau formant le deuxième élément (12, 22, 32), et
le deuxième élément (12, 22, 32) est formé avec un matériau ayant un module de Young supérieur au matériau formant le premier élément (11, 21, 31, 61).

3. Élément de ressort à disque (1, 2, 3, 4, 5, 6) selon la revendication 1 ou 2,
dans lequel le premier élément (11, 21, 31, 61) ou la plaque de raccordement (13) est pris(e) en sandwich entre le premier corps pressé (W1) et la partie d'extrémité radialement interne de la surface périphérique externe (12a) du deuxième élément (12, 22, 32) dans la première direction (Z), et est pris(e) en sandwich entre le deuxième corps pressé (W2) et la partie d'extrémité radialement externe de la surface périphérique interne (12b) du deuxième élément (12, 22, 32) dans la première direction (Z).

4. Élément de ressort à disque (1, 2, 3, 4, 5, 6) selon l'une quelconque des revendications 1 à. 3,
dans lequel un trou débouchant (12c, 21a) s'étendant dans la première direction (Z) est formé dans l'un parmi le premier élément (11, 21, 31, 61) et le deuxième élément (12, 22, 32) et l'autre parmi le premier élément (11, 21, 31, 61) et le deuxième élément (12, 22, 32) est inséré dans le trou débouchant (12c, 21a) de sorte que le premier élément (11, 21, 31, 61) couvre le deuxième élément (12, 22, 32) dans la première direction (Z).

5. Élément de ressort à disque (1, 2, 3, 4, 5, 6) selon l'une quelconque des revendications 1 à 4,
dans lequel le deuxième élément (12, 22, 32) diminue du point de vue du diamètre à partir du côté du premier corps pressé (W1) jusqu'au côté du deuxième corps pressé (W2) et est formé pour subir une déformation par flexion inversée dans laquelle le deuxième élément (12, 22, 32) augmente du point de vue du diamètre à partir du côté du premier corps pressé (W1) jusqu'au côté du deuxième corps pressé (W2), et
lorsque le deuxième élément (12, 22, 32) est déformé selon un mode de flexion inversée, une taille du deuxième élément (12, 22, 32) dans la première direction (Z) est augmentée par rapport à une taille du deuxième élément (12, 22, 32) dans la première direction (Z) avant la déformation.
